(19)

Europäisches
Patentamt
European
Patent Office
Office européen
des brevets

(11) **EP 3 392 310 A1**

(12) **EUROPEAN PATENT APPLICATION**
published in accordance with Art. 153(4) EPC

(43) Date of publication:
**24.10.2018 Bulletin 2018/43**

(21) Application number: **16875476.0**

(22) Date of filing: **06.12.2016**

(51) Int Cl.:
*C08L 71/02* [(2006.01)] *C08K 5/13* [(2006.01)]
*C08K 5/36* [(2006.01)] *C08K 5/39* [(2006.01)]
*C08K 5/40* [(2006.01)] *C08K 5/47* [(2006.01)]

(86) International application number:
**PCT/JP2016/086283**

(87) International publication number:
**WO 2017/104496 (22.06.2017 Gazette 2017/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **17.12.2015 JP 2015246680**

(71) Applicant: **Sumitomo Seika Chemicals Co., Ltd.
Kako-gun, Hyogo 675-0145 (JP)**

(72) Inventors:
• **YAMAGUCHI, Noboru
Tokyo 102-0073 (JP)**
• **IDO, Toru
Himeji-shi
Hyogo 672-8076 (JP)**
• **TASHIRO, Amina
Himeji-shi
Hyogo 672-8076 (JP)**

(74) Representative: **Busher, Samantha Jane
Elkington and Fife LLP
3-4 Holborn Circus
London, EC1N 2HA (GB)**

(54) **POLYALKYLENE OXIDE COMPOSITION**

(57) An aqueous solution and an aqueous dispersion of a composition that contains a polyalkylene oxide, a phenolic antioxidant and a sulfur-containing amine compound are less likely to impair the stability of the polyalkylene oxide even in the case of containing an alkali. In the above composition, the content of each of the phenolic antioxidant and the sulfur-containing amine compound is preferably set to 0.001 to 5 parts by mass based on 100 parts by mass of the polyalkylene oxide, and the ratio of the sulfur-containing amine compound relative to 100 parts by mass of the phenolic antioxidant is preferably set to 20 to 200 parts by mass.

EP 3 392 310 A1

**Description**

TECHNICAL FIELD

The present invention relates to a composition, in particular a polyalkylene oxide composition.

BACKGROUND ART

A polyalkylene oxide is used in various applications for a thickener, a coagulant, a paper-treating agent, a resin modifier, a surfactant, a pharmaceutical product and the like. For example, Patent Literature 1 discloses that an aqueous solution containing a polyalkylene oxide can be used as a viscous agent for papermaking. Patent Literature 2 discloses that a polyalkylene oxide can be used as a thickener.

PRIOR ART LITERATURES

PATENT LITERATURES

Patent Literature 1: Japanese Patent Laid-open Publication No. 2009-191423
Patent Literature 2: Japanese Patent Laid-open Publication No. 10-125226

SUMMARY OF THE INVENTION

PROBLEMS TO BE SOLVED BY THE INVENTION

In recent years, a polyalkylene oxide is expected to be developed to new applications utilizing its characteristics. Industrial applications such as a mining application, a cement application, and a dyeing application are conceivable as new applications that can effectively exhibit various properties of a polyalkylene oxide. In these applications, use environments and blending formulations may require that the polyalkylene oxide is needed to be used under coexistence with an alkali. However, the present inventors have confirmed that the stability of the polyalkylene oxide is impaired under coexistence with an alkali.

The present invention improves the stability of a polyalkylene oxide in the coexistence state of the polyalkylene oxide and an alkali such as a case where an aqueous solution or aqueous dispersion of the polyalkylene oxide contains an alkali.

SOLUTIONS TO THE PROBLEMS

As a result of extensive studies to solve the above problems, the present inventors have found that when a phenolic antioxidant and a sulfur-containing amine compound are used together with a polyalkylene oxide, the stability of the polyalkylene oxide under coexistence with an alkali is less likely to be impaired.

A composition according to the present invention contains a polyalkylene oxide, a phenolic antioxidant, and a sulfur-containing amine compound. The sulfur-containing amine compound used herein is at least one selected from the group consisting of mercaptobenzimidazoles, thioureas, thiurams, dithiocarbamates, and thiazoles, for example.

In the composition of the present invention, a content of the phenolic antioxidant is usually 0.001 to 5 parts by mass based on 100 parts by mass of the polyalkylene oxide.

In the composition of the present invention, a content of the sulfur-containing amine compound is usually 0.001 to 5 parts by mass based on 100 parts by mass of the polyalkylene oxide.

In the composition of the present invention, a ratio of the sulfur-containing amine compound relative to 100 parts by mass of the phenolic antioxidant is usually 20 to 200 parts by mass.

The polyalkylene oxide composition of the present invention can improve the stability of the polyalkylene oxide when used for a composition in the coexistence state of the polyalkylene oxide and an alkali.

Another aspect of the present invention relates to an aqueous solution. An aqueous solution according to the present invention contains the polyalkylene oxide composition of the present invention. One embodiment of the aqueous solution further contains an alkali.

Still another aspect of the present invention relates to an aqueous dispersion. An aqueous dispersion according to the present invention contains the polyalkylene oxide composition of the present invention. One embodiment of the aqueous dispersion further contains an alkali.

Other objects or results of the present invention will be described in the following detailed description.

EMBODIMENTS OF THE INVENTION

A polyalkylene oxide composition according to the present invention is a composition containing a polyalkylene oxide, a phenolic antioxidant, and a sulfur-containing amine compound as essential components. The polyalkylene oxide composition of the present invention may contain components (optional components) other than the above essential components.

[Polyalkylene Oxide]

The polyalkylene oxide that is an essential component and contained in the polyalkylene oxide composition of the present invention is a polymer of an alkylene oxide.
Examples of the alkylene oxide constituting the polyalkylene oxide include an aliphatic alkylene oxide having 2 to 4 carbon atoms, that is, ethylene oxide, propylene oxide, and butylene oxide. Of these, an aliphatic alkylene oxide having 2 to 3 carbon atoms, that is, ethylene oxide or propylene oxide is preferable. As the propylene oxide, 1,2-propylene oxide or 1,3-propylene oxide can be usually used, and both of them can be used in combination. As the butylene oxide, 1,2-butylene oxide, 2,3-butylene oxide, or isobutylene oxide can be usually used, and any of these can also be used in combination.
The polyalkylene oxide may be constituted by only one kind of alkylene oxide or may be constituted by two or more kinds of alkylene oxides. The polyalkylene oxide including two or more kinds of alkylene oxides may be a block copolymer or a random copolymer.
Specific examples of preferred polyalkylene oxides include polyethylene oxide, polypropylene oxide, polybutylene oxide, ethylene oxide-propylene oxide copolymer, ethylene oxide-butylene oxide copolymer, and propylene oxide-butylene oxide copolymer. The polyalkylene oxides of these examples may be a block copolymer or a random copolymer in the case where they are a copolymer including two or more alkylene oxides.
The polyalkylene oxide has a molecular weight of preferably 100,000 to 15,000,000, and more preferably 200,000 to 10,000,000, as a viscosity-average molecular weight.
The polyalkylene oxide can be produced by a known method, for example, a method for polymerizing an alkylene oxide in the presence of an alkali or a metal catalyst. Examples of the polyalkylene oxide that can be used include commercially available products such as "PEO" (product name) series manufactured by SUMITOMO SEIKA CHEMICALS CO., LTD., "POLYOX" (product name) series manufactured by The Dow Chemical Company, "Alkox" (product name) series manufactured by Meisei Chemical Works, Ltd., and "ZEOSPAN" (product name) series manufactured by Zeon Corporation.
In the polyalkylene oxide composition of the present invention, two or more kinds of polyalkylene oxides may be used in combination.
The proportion (blending rate) of the polyalkylene oxide in the polyalkylene oxide composition of the present invention is preferably 70% by mass or more (for example, 70 to 99.9% by mass), more preferably 80% by mass or more (for example, 80 to 99.9% by mass), and particularly preferably 90% by mass or more (for example, 90 to 99.9% by mass).

[Phenolic Antioxidant]

As the phenolic antioxidant that is an essential component contained in the polyalkylene oxide composition of the present invention, a known phenolic antioxidant can be used. Examples thereof include dibutylhydroxytoluene (BHT), dibutylhydroxyanisole (BHA), octadecyl-3-(3,5-di-tert-butyl-4-hydroxyphenyl)propionate, 2,2'-methylenebis(4-methyl-6-tert-butylphenol), 2-tert-butyl-6-(3-tert-butyl-2-hydroxy-5-methylbenzyl)-4-me thylphenyl acrylate, 2-[1-(2-hydroxy-3,5-di-tert-pentylphenyl)ethyl]-4,6-di-tert -pentylphenylacrylate, 4,4'-butylidenebis(3-methyl-6-tert-butylphenol), 4,4'-thio-bis(3-methyl-6-tert-butylphenol), tetrakis[methylene-3-(3,5-di-tert-butyl-4-hydroxyphenyl)pro pionate]methane, 3,9-bis[2-(3-(3-tert-butyl-4-hydroxy-5-methylphenyl)-propio nyloxy)-1,1-dimethylethyl]-2,4,8,10-tetraoxaspiro[5,5]undec ane, various phenolic compounds that are marketed under "ADEKASTAB AO" (product name) series manufactured by ADEKA, and compounds corresponding to phenolic compounds among various compounds that are marketed under "IRGANOX" (product name) series manufactured by BASF.
In the polyalkylene oxide composition of the present invention, two or more kinds of phenolic antioxidants can be used in combination.
The content (blending amount) of the phenolic antioxidant in the polyalkylene oxide composition of the present invention is preferably 0.001 to 5 parts by mass, more preferably 0.01 to 2 parts by mass, and particularly preferably 0.05 to 1 part by mass based on 100 parts by mass of the polyalkylene oxide. When the content of the phenolic antioxidant is set to 0.001 parts by mass or more, the stability of the polyalkylene oxide under coexistence with an alkali tends to be improved. Further, when the content of the phenolic antioxidant is set to 5 parts by mass or less, the balance between the stability of the polyalkylene oxide under coexistence with an alkali and raw material cost tends to be enhanced.

[Sulfur-Containing Amine Compound]

The sulfur-containing amine compound that is an essential component of the polyalkylene oxide composition of the present invention, that is, a sulfur atom-containing amine compound is an amine compound containing one or more sulfur atoms in its molecule. Examples of the sulfur-containing amine compound include mercaptobenzimidazoles such as 2-mercaptobenzimidazole, 2-mercaptomethylbenzimidazole, 4-mercaptomethylbenzimidazole, 5-mercaptomethylbenzimidazole and salts thereof (for example, zinc salt); thiazoles such as benzothiazoles, for example, 2-mercaptobenzothiazole, 2-benzothiazolyl disulfide, zinc salt of 2-mercaptobenzothiazole, N-cyclohexyl-2-benzothiazole sulfenamide, N-oxydiethylene-2-benzothiazole sulfenamide, 2-mercaptobenzothiazole sodium salt and 2-(4-morpholinyldithio)benzothiazole; thioureas such as ethylenethiourea, diethylthiourea, dibutylthiourea, dilaurylthiourea, diphenylthiourea and trimethylthiourea; thiurams such as tetramethylthiuram disulfide, tetraethylthiuram disulfide, tetrabutylthiuram disulfide, dipentamethylenethiuram tetrasulfide and tetramethylthiuram monosulfide; dithiocarbamates such as zinc dimethyldithiocarbamate, zinc diethyldithiocarbamate, zinc dibutyldithiocarbamate, zinc ethylphenyldithiocarbamate, piperidine salt of pentamethylene dithiocarbamate, tellurium diethyldithiocarbamate, sodium dimethyldithiocarbamate, sodium diethyldithiocarbamate, sodium dibutyldithiocarbamate, nickel dibutyldithiocarbamate, and sodium N,N-diethyldithiocarbamate trihydrate; thiazoles, isothiazoles, thiamine, mercaptobenzoxazole, and 1-phenyl-5-mercapto-1H-tetrazole. Among these sulfur-containing amine compounds, mercaptobenzimidazoles, thioureas, thiurams, dithiocarbamates, and thiazoles are preferable, and mercaptobenzimidazoles, thioureas, and thiazoles are particularly preferable, from the viewpoint of the stability of the polyalkylene oxide under coexistence with an alkali.

A sulfur-containing amine compound synthesized by a known method can be used, and a commercially available product can also be used. Examples of the commercially available products include "NOCCELER" (product name) series and "NOCRAC" (product name) series manufactured by OUCHI SHINKO CHEMICAL INDUSTRIAL CO., LTD., "ACCEL" and "ANTAGE" (product names) series manufactured by Kawaguchi Chemical Industry Co., LTD., and "SANCELER" series (product name) manufactured by SANSHIN CHEMICAL INDUSTRY CO., LTD.

In the polyalkylene oxide composition of the present invention, two or more kinds of sulfur-containing amine compounds may be used in combination.

The content (blending amount) of the sulfur-containing amine compound in the polyalkylene oxide composition of the present invention is preferably 0.001 to 5 parts by mass, more preferably 0.01 to 2 parts by mass, and particularly preferably 0.05 to 1 part by mass based on 100 parts by mass of the polyalkylene oxide. When the content of the sulfur-containing amine compound is set to 0.001 parts by mass or more, the stability of the polyalkylene oxide under coexistence with an alkali tends to be improved. Further, when the content of the sulfur-containing amine compound is set to 5 parts by mass or less, the balance between the stability of the polyalkylene oxide under coexistence with an alkali and raw material cost tends to be enhanced.

The ratio of the sulfur-containing amine compound relative to 100 parts by mass of the phenolic antioxidant in the polyalkylene oxide composition of the present invention is preferably 20 to 200 parts by mass, more preferably 50 to 150 parts by mass, and particularly preferably 80 to 120 parts by mass. Alternatively, the ratio of the sulfur-containing amine compound relative to 1 mol of the phenolic antioxidant in the polyalkylene oxide composition of the present invention is preferably 0.5 to 1.5 mol, and more preferably 0.8 to 1.2 mol. When the ratio of the sulfur-containing amine compound to the phenolic antioxidant is controlled within the above range, the stability of the polyalkylene oxide under coexistence with an alkali tends to be improved.

The polyalkylene oxide composition of the present invention may contain various additives. Examples of the additives include antioxidant other than the phenolic antioxidant, ultraviolet absorber, filler, colorant (for example, pigment and dye), antiseptic, rust inhibitor, surfactant, solvent (for example, organic solvent), flow improver (for example, silica), viscosity modifier (for example, hydrophilic silica and water-soluble polymer) and electrolyte. Two or more kinds of these additives may be used in combination. Usually, the content of the additive in the polyalkylene oxide composition of the present invention can be appropriately set in accordance with its application and the like.

The conditions of the polyalkylene oxide composition of the present invention are not particularly limited. For example, the polyalkylene oxide composition may be in a powdery or solid state, or in a liquid state such as a liquid, a solution or a dispersion, at 1 atm and 25°C.

The polyalkylene oxide composition of the present invention can be produced by various methods. A powdery or solid polyalkylene oxide composition can be prepared by, for example, a method for dry-blending required components at once or in stages. On the other hand, a liquid polyalkylene oxide composition can be prepared by, for example, a method for charging and mixing a composition prepared by dry-blending required components in a solvent or dispersion medium to dissolve or disperse the composition, or method for charging and mixing required components in a solvent or dispersion medium at once or in stages to dissolve or disperse the components. In the latter method for preparing a liquid polyalkylene oxide composition, for example, the following method can be employed. A solution or dispersion of polyalkylene oxide is prepared, and a phenolic antioxidant, a sulfur-containing amine compound and the like are appropriately blended with the solution or dispersion. The concentration of the liquid polyalkylene oxide composition can be adjusted by controlling the solvent or dispersion medium used during the preparation or by appropriately removing the solvent or dispersion medium after the preparation.

The powdery or solid polyalkylene oxide composition can also be prepared by removing the solvent or dispersion medium from the liquid polyalkylene oxide composition, followed by drying.

The solvent or dispersion medium used for preparing the liquid polyalkylene oxide composition is water or various organic media, and is not particularly limited. Usually, water that can be used herein is preferably purified water such as ion-exchanged water or pure water. However, depending on the application of the polyalkylene oxide composition, the water may be tap water or industrial water. Examples of the organic media that can be used herein include alcohols such as methanol and ethanol, esters such as ethylene carbonate and propylene carbonate, ketones such as acetone and methyl ethyl ketone, ethers such as tetrahydrofuran, aromatic hydrocarbons such as benzene, toluene and xylene, and polar solvents such as dimethylformamide, chloroform and dichloroethane. Two or more kinds of the organic media may be used in combination.

The polyalkylene oxide composition of the present invention can be used in various applications for a thickener, a coagulant, a paper treatment agent, a resin modifier, a surfactant, a pharmaceutical product and the like. For example, the polyalkylene oxide composition is suitable in a papermaking application using a papermaking viscous agent and the like, an electronic material application using a binder and the like, a dyeing application using a pretreatment agent for dyeing and the like, a cement application and a mining application. The polyalkylene oxide composition of the present invention is particularly suitable in applications requiring use of an alkali, such as a dyeing application, a cement application and a mining application as it can improve the stability of the polyalkylene oxide under coexistence with an alkali.

When an aqueous solution and an aqueous dispersion containing the polyalkylene oxide composition of the present invention are used in applications requiring use of an alkali such as a dyeing application, the aqueous solution and the aqueous dispersion can also be prepared as an aqueous solution and an aqueous dispersion each further containing a required alkali. Such an aqueous solution and an aqueous dispersion can be applied as they are to the applications requiring use of an alkali such as a dyeing application. The alkali used for preparing the aqueous solution or aqueous dispersion further containing an alkali is not particularly limited as long as the alkali is an alkali other than the sulfur-containing amine compound, and examples thereof include alkali metal hydroxides such as sodium hydroxide and potassium hydroxide, alkaline earth metal hydroxides such as calcium hydroxide, alkali metal carbonates such as sodium carbonate, bicarbonates such as potassium hydrogencarbonate and sodium hydrogencarbonate, inorganic bases such as ammonia, and organic bases such as amine and urea. In preparing the aqueous solution or aqueous dispersion further containing an alkali, two or more kinds of alkalis may be used in combination. The content (blending amount) of the alkali in the aqueous solution or aqueous dispersion further containing an alkali can be appropriately selected in accordance with the applications, and is usually preferably 0.1 to 15% by mass.

EXAMPLES

Hereinafter, the present invention will be specifically described by way of examples, comparative examples, and reference examples, but the present invention is not limited to the examples.

[Example 1]

29.94 parts by mass of a polyethylene oxide having a viscosity-average molecular weight of 800,000, 0.03 parts by mass of dibutylhydroxytoluene (BHT), and 0.03 parts by mass of 2-mercaptobenzimidazole (manufactured by Kawaguchi Chemical Industry Co., Ltd.) were dry-blended to produce a polyalkylene oxide composition (1).

970 parts by mass of a 3% sodium hydrogen carbonate aqueous solution was placed in a 1,000-mL plastic beaker, and stirring was started at a tip peripheral speed of 1.0 m/s using a flat plate (width: 80 mm, length: 25 mm). 30 parts by mass of the resulting polyalkylene oxide composition (1) was charged thereto, and stirring was continued for 3 hours while the same conditions were maintained to produce an alkali-containing aqueous solution.

[Example 2]

29.94 parts by mass of a polyethylene oxide having a viscosity-average molecular weight of 800,000, 0.03 parts by mass of dibutylhydroxytoluene (BHT), and 0.03 parts by mass of 2-mercaptobenzothiazole (manufactured by Tokyo Chemical Industry Co., Ltd.) were dry blended to produce a polyalkylene oxide composition (2). An alkali-containing aqueous solution was produced in the same manner as in Example 1 except that 30 parts by mass of the resulting polyalkylene oxide composition (2) was used in place of 30 parts by mass of the polyalkylene oxide composition (1).

[Example 3]

29.94 parts by mass of a polyethylene oxide having a viscosity-average molecular weight of 800,000, 0.03 parts by mass of dibutylhydroxytoluene (BHT), and 0.03 parts by mass of ethylenethiourea (manufactured by Tokyo Chemical Industry Co., Ltd.) were dry-blended to produce a polyalkylene oxide composition (3). An alkali-containing aqueous solution was produced in the same manner as in Example 1 except that 30 parts by mass of the resulting polyalkylene oxide composition (3) was used in place of 30 parts by mass of the polyalkylene oxide composition (1).

[Example 4]

29.94 parts by mass of a polyethylene oxide having a viscosity-average molecular weight of 800,000, 0.03 parts by mass of dibutylhydroxytoluene (BHT), and 0.03 parts by mass of tetraethylthiuram disulfide (manufactured by Tokyo Chemical Industry Co., Ltd.) were dry-blended to produce a polyalkylene oxide composition (4). An alkali-containing aqueous solution was produced in the same manner as in Example 1 except that 30 parts by mass of the resulting polyalkylene oxide composition (4) was used in place of 30 parts by mass of the polyalkylene oxide composition (1).

[Example 5]

29.94 parts by mass of a polyethylene oxide having a viscosity-average molecular weight of 800,000, 0.03 parts by mass of dibutylhydroxytoluene (BHT), and 0.03 parts by mass of zinc dimethyldithiocarbamate (manufactured by Kawaguchi Chemical Industry Co., Ltd.) were dry-blended to produce a polyalkylene oxide composition (5). An alkali-containing aqueous solution was produced in the same manner as in Example 1 except that 30 parts by mass of the resulting polyalkylene oxide composition (5) was used in place of 30 parts by mass of the polyalkylene oxide composition (1).

[Example 6]

29.94 parts by mass of a polyethylene oxide having a viscosity-average molecular weight of 800,000, 0.03 parts by mass of dibutylhydroxytoluene (BHT), and 0.03 parts by mass of zinc diethyldithiocarbamate (manufactured by Kawaguchi Chemical Industry Co., Ltd.) were dry-blended to produce a polyalkylene oxide composition (6). An alkali-containing aqueous solution was produced in the same manner as in Example 1 except that 30 parts by mass of the resulting polyalkylene oxide composition (6) was used in place of 30 parts by mass of the polyalkylene oxide composition (1).

[Example 7]

29.94 parts by mass of a polyethylene oxide having a viscosity-average molecular weight of 800,000, 0.03 parts by mass of dibutylhydroxytoluene (BHT), and 0.03 parts by mass of sodium N,N-diethyldithiocarbamate trihydrate (manufactured by Wako Pure Chemical Industries, Ltd.) were dry-blended to produce a polyalkylene oxide composition (7). An alkali-containing aqueous solution was produced in the same manner as in Example 1 except that 30 parts by mass of the resulting polyalkylene oxide composition (7) was used in place of 30 parts by mass of the polyalkylene oxide composition (1) .

[Example 8]

29.955 parts by mass of a polyethylene oxide having a viscosity-average molecular weight of 800,000, 0.03 parts by mass of dibutylhydroxytoluene (BHT), and 0.015 parts by mass of 2-mercaptobenzimidazole (manufactured by Kawaguchi Chemical Industry Co., Ltd.) were dry-blended to produce a polyalkylene oxide composition (8). An alkali-containing aqueous solution was produced in the same manner as in Example 1 except that 30 parts by mass of the resulting polyalkylene oxide composition (8) was used in place of 30 parts by mass of the polyalkylene oxide composition (1).

[Example 9]

29.82 parts by mass of a polyethylene oxide having a viscosity-average molecular weight of 800,000, 0.03 parts by mass of dibutylhydroxytoluene (BHT), and 0.15 parts by mass of tetraethylthiuram disulfide (manufactured by Tokyo Chemical Industry Co., Ltd.) were dry-blended to produce a polyalkylene oxide composition (9). An alkali-containing aqueous solution was produced in the same manner as in Example 1 except that 30 parts by mass of the resulting polyalkylene oxide composition (9) was used in place of 30 parts by mass of the polyalkylene oxide composition (1).

[Example 10]

29.67 parts by mass of a polyethylene oxide having a viscosity-average molecular weight of 800,000, 0.03 parts by mass of dibutylhydroxytoluene (BHT), and 0.3 parts by mass of tetraethylthiuram disulfide (manufactured by Tokyo Chemical Industry Co., Ltd.) were dry-blended to produce a polyalkylene oxide composition (10). An alkali-containing aqueous solution was produced in the same manner as in Example 1 except that 30 parts by mass of the resulting polyalkylene oxide composition (10) was used in place of 30 parts by mass of the polyalkylene oxide composition (1).

[Comparative Example 1]

A polyalkylene oxide composition (11) was produced in the same manner as in Example 1 except that 2-mercaptobenzimidazole was not used. An alkali-containing aqueous solution was produced in the same manner as in Example 1 except that 30 parts by mass of the resulting polyalkylene oxide composition (11) was used in place of 30 parts by mass of the polyalkylene oxide composition (1).

[Comparative Example 2]

A polyalkylene oxide composition (12) was produced in the same manner as in Example 1 except that 0.03 parts by mass of 2,4,6-tris(3',5'-di-tert-butyl-4'-hydroxybenzyl mesitylene (manufactured by BASF) was used in place of 0.03 parts by mass of 2-mercaptobenzimidazole. An alkali-containing aqueous solution was produced in the same manner as in Example 1 except that 30 parts by mass of the resulting polyalkylene oxide composition (12) was used in place of 30 parts by mass of the polyalkylene oxide composition (1).

[Comparative Example 3]

A polyalkylene oxide composition (13) was produced in the same manner as in Example 1 except that 0.03 parts by mass of hexamethylenetetramine (manufactured by MITSUBISHI GAS CHEMICAL COMPANY, INC.) was used in place of 0.03 parts by mass of 2-mercaptobenzimidazole. An alkali-containing aqueous solution was produced in the same manner as in Example 1 except that 30 parts by mass of the resulting polyalkylene oxide composition (13) was used in place of 30 parts by mass of the polyalkylene oxide composition (1).

[Reference Example 1]

A polyalkylene oxide composition (14) corresponding to the polyalkylene oxide composition (11) produced in Comparative Example 1 was produced.
970 parts by mass of water was placed in a 1,000-mL plastic beaker, and stirring was started at a tip peripheral speed of 1.0 m/s using a flat plate (width: 80 mm, length: 25 mm). 30 parts by mass of the resulting polyalkylene oxide composition (14) was charged thereto, and stirring was continued for 3 hours while the same conditions were maintained, to produce an aqueous solution.

[Stability Evaluation]

Each of the alkali-containing aqueous solutions produced in Examples 1 to 10 and Comparative Examples 1 to 3 and the aqueous solution produced in Reference Example 1 were separately placed in a polyethylene container having a volume of 500 mL, and the stability immediately after the production and temporal stability of each of the aqueous solutions were evaluated based on the measurement results of viscosities . The sealed polyethylene container was kept in a thermo-hygrostat (model number: "PR-2ST" manufactured by ESPEC) adjusted to an environment of 40°C and 75% RH, and the temporal stability was evaluated at each of time points after 7 days, 13 days, 21 days, 28 days, 60 days, and 75 days from the production.
In the viscosity measurement of each of the alkali aqueous solutions and aqueous solution, the polyethylene container was immersed in a constant temperature bath at 25°C for about 30 minutes. The viscosity was then measured at 25°C for 3 minutes by using a B type rotary viscometer ("Rotor No. 2" manufactured by TOKIMEC) with a rotation speed adjusted to 12 rpm.

The results are shown in Table 1. In Table 1, a viscosity retention rate is determined by the following formula. A higher viscosity retention rate represents higher temporal stability.

[Expression 1]

Viscosity retention rate (%)

= {viscosity at each time point [mPa·s] / viscosity immediately after production [mPa·s]} X 100

[Table 1]

| | | Immediately after production | After 7 days | After 13 days | After 21 days | After 28 days | After 60 days | After 75 days |
|---|---|---|---|---|---|---|---|---|
| Example 1 | Viscosity [mPa·s] | 266 | 222 | 235 | 219 | 216 | 221 | 219 |
| | Viscosity retention rate [%] | 100 | 83 | 88 | 82 | 81 | 83 | 82 |
| | pH | 8.86 | - | 8.80 | - | 8.92 | 9.22 | 9.06 |
| Example 2 | Viscosity [mPa·s] | 240 | 225 | 225 | 210 | 210 | 210 | 205 |
| | Viscosity retention rate [%] | 100 | 94 | 94 | 88 | 88 | 88 | 85 |
| | pH | 9.01 | 9.03 | 9.06 | 8.98 | 9.11 | 8.99 | 9.22 |
| Example 3 | Viscosity [mPa·s] | 235 | 210 | 215 | 215 | 210 | 210 | 210 |
| | Viscosity retention rate [%] | 100 | 89 | 91 | 91 | 89 | 89 | 89 |
| | pH | 9.01 | 9.04 | 9.10 | 8.99 | 9.12 | 8.98 | 9.25 |
| Example 4 | Viscosity [mPa·s] | 360 | 200 | 200 | 185 | 185 | 185 | 170 |
| | Viscosity retention rate [%] | 100 | 56 | 56 | 51 | 51 | 51 | 47 |
| | pH | 9.00 | 9.04 | 9.04 | 8.96 | 9.11 | 8.98 | 9.24 |
| Example 5 | Viscosity [mPa·s] | 240 | 215 | 190 | 160 | 135 | 130 | 110 |
| | Viscosity retention rate [%] | 100 | 90 | 79 | 67 | 56 | 54 | 46 |
| | pH | 9.02 | 9.05 | 9.11 | 8.97 | 9.08 | 8.98 | 9.22 |

(continued)

|  |  | Immediately after production | After 7 days | After 13 days | After 21 days | After 28 days | After 60 days | After 75 days |
|---|---|---|---|---|---|---|---|---|
| Example 6 | Viscosity [mPa·s] | 235 | 215 | 210 | 195 | 190 | 170 | 160 |
| | Viscosity retention rate [%] | 100 | 91 | 89 | 83 | 81 | 72 | 68 |
| | pH | 9.00 | 9.03 | 9.08 | 8.97 | 9.08 | 8.97 | 9.19 |
| Example 7 | Viscosity [mPa·s] | 235 | 220 | 210 | 195 | 190 | 170 | 160 |
| | Viscosity retention rate [%] | 100 | 94 | 89 | 83 | 81 | 72 | 68 |
| | pH | 9.00 | 9.05 | 9.09 | 8.97 | 9.10 | 8.98 | 9.25 |
| Example 8 | Viscosity [mPa·s] | 240 | 210 | 230 | 210 | 215 | 220 | 210 |
| | Viscosity retention rate [%] | 100 | 88 | 96 | 88 | 90 | 92 | 88 |
| | pH | 9.00 | 9.07 | 8.97 | 9.01 | 9.16 | 9.08 | 9.18 |
| Example 9 | Viscosity [mPa·s] | 350 | 210 | 195 | 195 | 205 | 170 | 170 |
| | Viscosity retention rate [%] | 100 | 60 | 56 | 56 | 59 | 49 | 49 |
| | pH | 8.98 | 9.04 | 8.93 | 8.96 | 9.12 | 8.98 | 9.05 |
| Example 10 | Viscosity [mPa·s] | 355 | 210 | 185 | 200 | 195 | 210 | 170 |
| | Viscosity retention rate [%] | 100 | 59 | 52 | 56 | 55 | 59 | 48 |
| | pH | 9.01 | 9.04 | 8.92 | 8.98 | 9.11 | 8.96 | 9.05 |
| Comparative Example 1 | Viscosity [mPa·s] | 354 | 132 | 39 | 19 | 13 | 5 | 6 |
| | Viscosity retention rate [%] | 100 | 37 | 11 | 5 | 4 | 1 | 2 |
| | pH | 8.84 | - | 8.83 | - | 8.86 | 9.08 | 8.96 |
| Comparative Example 2 | Viscosity [mPa·s] | 341 | 101 | 36 | 21 | 14 | 6 | 10 |
| | Viscosity retention rate [%] | 100 | 30 | 11 | 6 | 4 | 2 | 3 |
| | pH | 8.82 | - | 8.85 | - | 8.85 | 9.08 | 8.93 |

(continued)

|  |  | Immediately after production | After 7 days | After 13 days | After 21 days | After 28 days | After 60 days | After 75 days |
|---|---|---|---|---|---|---|---|---|
| Comparative Example 3 | Viscosity [mPa·s] | 345 | 162 | 59 | 32 | 13 | 10 | 12 |
| | Viscosity retention rate [%] | 100 | 47 | 17 | 9 | 4 | 3 | 3 |
| | pH | 8.84 | - | 8.82 | - | 8.88 | 9.17 | 8.96 |
| Reference Example 1 | Viscosity [mPa·s] | 396 | 309 | 283 | 283 | 266 | 241 | 239 |
| | Viscosity retention rate [%] | 100 | 78 | 71 | 71 | 67 | 61 | 60 |
| | pH | 7.23 | - | 7.12 | - | 7.87 | 6.76 | 7.04 |

**Claims**

1. A polyalkylene oxide composition comprising:

   a polyalkylene oxide;
   a phenolic antioxidant; and
   a sulfur-containing amine compound.

2. The polyalkylene oxide composition according to claim 1, wherein the sulfur-containing amine compound is at least one selected from the group consisting of mercaptobenzimidazoles, thioureas, thiurams, dithiocarbamates, and thiazoles.

3. The polyalkylene oxide composition according to claim 1, wherein a content of the phenolic antioxidant is 0.001 to 5 parts by mass based on 100 parts by mass of the polyalkylene oxide.

4. The polyalkylene oxide composition according to claim 1, wherein a content of the sulfur-containing amine compound is 0.001 to 5 parts by mass based on 100 parts by mass of the polyalkylene oxide.

5. The polyalkylene oxide composition according to claim 1, wherein a ratio of the sulfur-containing amine compound relative to 100 parts by mass of the phenolic antioxidant is 20 to 200 parts by mass.

6. A polyalkylene oxide aqueous solution comprising the polyalkylene oxide composition according to any one of claims 1 to 5.

7. The polyalkylene oxide aqueous solution according to claim 6, further comprising an alkali.

8. A polyalkylene oxide aqueous dispersion comprising the polyalkylene oxide composition according to any one of claims 1 to 5.

9. The polyalkylene oxide aqueous dispersion according to claim 8, further comprising an alkali.

## INTERNATIONAL SEARCH REPORT

| International application No. |
| --- |
| PCT/JP2016/086283 |

**A. CLASSIFICATION OF SUBJECT MATTER**
*C08L71/02*(2006.01)i, *C08K5/13*(2006.01)i, *C08K5/36*(2006.01)i, *C08K5/39* (2006.01)i, *C08K5/40*(2006.01)i, *C08K5/47*(2006.01)i

According to International Patent Classification (IPC) or to both national classification and IPC

**B. FIELDS SEARCHED**

Minimum documentation searched (classification system followed by classification symbols)
C08L71/02, C08K5/13, C08K5/36, C08K5/39, C08K5/40, C08K5/47

Documentation searched other than minimum documentation to the extent that such documents are included in the fields searched
Jitsuyo Shinan Koho        1922-1996    Jitsuyo Shinan Toroku Koho    1996-2017
Kokai Jitsuyo Shinan Koho    1971-2017    Toroku Jitsuyo Shinan Koho    1994-2017

Electronic data base consulted during the international search (name of data base and, where practicable, search terms used)
CAplus/REGISTRY(STN)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 9-132705 A  (Meisei Chemical Works, Ltd.),<br>20 May 1997 (20.05.1997),<br>claim 1; paragraph [0018]; table 2<br>(Family: none) | 1-5<br>1-9 |
| X<br>Y | JP 45-6944 B1  (Nippon Carbide Industries Co., Inc.),<br>10 March 1970 (10.03.1970),<br>claim 1; page 4, lower right column, lines 35 to 40; table 1<br>(Family: none) | 1-5<br>1-9 |

☒  Further documents are listed in the continuation of Box C.          ☐    See patent family annex.

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    01 February 2017 (01.02.17) | Date of mailing of the international search report<br>    14 February 2017 (14.02.17) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

| International application No. |
| --- |
| PCT/JP2016/086283 |

C (Continuation).  DOCUMENTS CONSIDERED TO BE RELEVANT

| Category* | Citation of document, with indication, where appropriate, of the relevant passages | Relevant to claim No. |
| --- | --- | --- |
| X<br>Y | JP 2010-537003 A  (E.I. Du Pont de Nemours & Co.),<br>02 December 2010 (02.12.2010),<br>claim 1; paragraphs [0131], [0132]; table 1<br>& US 2009/0054283 A1<br>claim 1; paragraph [0124]; table 1<br>& EP 2181182 A1      & CN 101784645 A | 1-5<br>1-9 |
| Y | JP 45-19396 B1  (Seitetsu Kagaku Kogyo Co., Ltd.),<br>02 July 1970 (02.07.1970),<br>claim 1; page 1, left column, lines 27 to 31; page 6, left column, line 30 to right column, line 1; page 6, right column, lines 20 to 32; table 1<br>(Family: none) | 1-9 |
| Y<br>A | JP 10-204183 A  (Sumitomo Seika Chemicals Co., Ltd.),<br>04 August 1998 (04.08.1998),<br>paragraph [0016]<br>& WO 1998/032785 A1 | 6-9<br>1-5 |
| A | JP 45-19395 B1  (Mitsui Petrochemical Industries, Ltd.),<br>02 July 1970 (02.07.1970),<br>table 2<br>(Family: none) | 1-9 |
| A | JP 46-43473 B1  (Sumitomo Chemical Co., Ltd.),<br>23 December 1971 (23.12.1971),<br>table 2<br>(Family: none) | 1-9 |

Form PCT/ISA/210 (continuation of second sheet) (January 2015)

**EP 3 392 310 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009191423 A
- JP 10125226 A